# EUROPEAN PATENT APPLICATION

(11) **EP 3 021 429 A1**
(43) Date of publication of application: **18.05.2016**
(21) Application number: 14839562.7
(22) Date of filing: 05.08.2014
(51) Int. Cl.: H01R 43/20, H01B 13/012

(54) **PRODUCTION DEVICE FOR WIRE HARNESS AND PRODUCTION METHOD THEREFOR**

(30) Priority: 26.08.2013 JP 2013174171
(71) Applicant: Sumitomo Wiring Systems, Ltd., Yokkaichi-shi, Mie 510-8503 (JP)
(72) Inventor: HORIKI Hideoki, Yokkaichi-shi, Mie 510-8503 (JP); SATO Katsuyoshi, Yokkaichi-shi, Mie 510-8503 (JP)
(74) Representative: Horn Kleimann Waitzhofer Patentanwälte PartG mbB
(86) International application number: PCT/JP2014/070556
(87) International publication number: WO 2015/029711

(57) **Abstract**

It is an object of the present invention to provide a device and a method suited to allow a step of inserting terminals of a plurality of terminal-attached electric wires respectively into cavities of a plurality of connectors to be performed as a single integrated process in units of one wire harness set or one sub wire harness set. An electric wire arranging member conveying mechanism detachably holds and moves an electric wire arranging member in which a plurality of electric wire fastening portions are arranged in one line, along a direction in which the electric wire fastening portions are lined up, thereby selectively positioning the individual electric wire fastening portions at a predetermined start position. A connector arranging member conveying mechanism detachably holds and moves a connector arranging member supporting the plurality of connectors, parallel to the direction in which the electric wire fastening portions are lined up, thereby selectively positioning the individual cavities of the connectors at a predetermined end position.

## Description

### Technical Field

The present invention relates to a production device and a production method for a wire harness including a plurality of electric wires having a terminal attached thereto (in the following: "terminal-attached electric wires") and connectors accommodating the terminals of the terminal-attached electric wires.

### Background Art

Wire harnesses mounted in vehicles such as automobiles in many cases include a plurality of terminal-attached electric wires and connectors accommodating the terminals of the terminal-attached electric wires. Each of such terminal-attached electric wires has an electric wire and terminals connected to end portions of the electric wire. Each of the connectors has a plurality of cavities for accommodating the terminals of the terminal-attached electric wires.

In the wire harness production process, the terminals of the plurality of terminal-attached electric wires are respectively inserted into the plurality of cavities of the connectors. For example, as shown in Patent Document 1, a device for inserting terminals of terminal-attached electric wires into cavities of a connector is used in the wire harness production process.

The device shown in Patent Document 1 includes a movable support portion that horizontally and vertically moves a holding jig holding a housing (connector). The movable support portion positions the housing such that the terminal accommodating holes (cavities) are oriented in the terminal insertion direction.

Furthermore, the device shown in Patent Document 1 includes a rod-shaped bar having a plurality of pairs of gripping members, and the gripping members grip electric wires of terminal-attached electric wires. Furthermore, the device shown in Patent Document 1 includes an insertion unit that grips and moves a terminal and an electric wire of each of the terminal-attached electric wires.

In the device shown in Patent Document 1, the insertion unit includes chuck units that chuck the terminal and the electric wire of the terminal-attached electric wire, and a moving unit that moves these chuck units in the vertical direction and the insertion direction. The insertion unit detaches the terminal-attached electric wire from the gripping members, and inserts the terminal of the detached terminal-attached electric wire into one of the terminal accommodating holes (cavities) of the housing (connector) positioned by the movable support portion.

Furthermore, according to the device shown in Patent Document 1, if the insertion of the plurality of terminals into one housing is completed, the movable support portion lowers the holding jig while the chuck unit is still chucking the electric wire of the terminal-attached electric wire. Accordingly, the housing (connector) is released from the holding jig.

### Citation List

### Patent Document

Patent Document 1: JP 2009-64722A

### Summary of Invention

### Technical Problem

Incidentally, the wire harness production process in many cases includes a preliminary assembly step of combining a plurality of parts to produce a plurality of sub (i.e. subordinate) wire harnesses and a main assembly step of combining the sub wire harnesses. Furthermore, the wire harnesses and the sub wire harnesses in many cases include a plurality of connectors and a plurality of terminal-attached electric wires whose terminals are inserted into cavities of the connectors.

Accordingly, in the wire harness production process, it is desirable that the step of inserting the terminals of the terminal-attached electric wires respectively into the cavities of the connectors is performed as a single integrated process in units of one wire harness set or one sub wire harness set. In this case, it is necessary to support and position the plurality of connectors, and to support and position the plurality of terminal-attached electric wires having the terminals that are to be inserted into the cavities of the plurality of connectors.

However, conventional wire harness production devices do not have a mechanism suited to allow the step of inserting the terminals of the plurality of terminal-attached electric wires respectively into the cavities of the plurality of connectors to be performed as a single integrated process in units of one wire harness set or one sub wire harness set.

For example, Patent Document 1 does not disclose any mechanism for supporting and positioning a plurality of housings (connectors).

Furthermore, according to the device shown in Patent Document 1, if the terminal inserting step is successively performed on a plurality of connectors, the plurality of housings (connectors) after the terminal inserting step are supported by the bar having the gripping members gripping the electric wires of the terminal-attached electric wires. In this case, when the bar is conveyed to the location for the main assembly step, the electric wires easily drop off the bar due to the weight of the connectors.

It is an object of the present invention to provide a production device and a production method for a wire harness, suited to allow a step of inserting terminals of a plurality of terminal-attached electric wires respectively into cavities of a plurality of connectors to be performed as a single integrated process in units of one wire harness set or one sub wire harness set.

### Solution to Problem

A production device for a wire harness according to a first aspect is a production device for producing a wire harness, the wire harness including a plurality of terminal-attached electric wires each having an electric wire and a terminal connected to an end portion of the electric wire, and a plurality of connectors each of which has a plurality of cavities that accommodate the terminals of the terminal-attached electric wires. The production device for a wire harness according to the first aspect includes constituent elements described below.
(1) A first constituent element is an electric wire arranging member conveying mechanism for detachably holding an electric wire arranging member in which a plurality of electric wire fastening portions are arranged in one line, the electric wire fastening portions elastically gripping and fastening the terminal-attached electric wires, at a portion of the electric wires on the side of the terminal, and for moving the electric wire arranging member. The electric wire arranging member conveying mechanism detachably holds the electric wire arranging member in a state where front ends of the terminals of the terminal-attached electric wires are oriented in a first direction and the electric wire fastening portions are lined up in a second direction that is orthogonal to the first direction, and moves the electric wire arranging member in the second direction. Accordingly, the electric wire arranging member conveying mechanism selectively positions the individual electric wire fastening portions at a predetermined start position.
(2) A second constituent element is a connector arranging member conveying mechanism for detachably holding a connector arranging member supporting the plurality of connectors that are arranged in at least one line, and for moving the connector arranging member. The connector arranging member conveying mechanism detachably holds the connector arranging member in a state where the plurality of connectors are arranged parallel to the direction in which the electric wire fastening portions are lined up, and moves the connector arranging member in the second direction. Accordingly, the connector arranging member conveying mechanism selectively positions the individual cavities of the connectors at a predetermined end position in the second direction.
(3) A third constituent element is a mechanism for inserting the terminal of each of the terminal-attached electric wires into the cavity positioned at the end position. The terminal insertion mechanism grips and moves part of an end region of each of the terminal-attached electric wires, the end region extending from the terminal to a portion of the electric wire on the side of the terminal. The terminal insertion mechanism grips and moves part of the end region of the terminal-attached electric wire, thereby detaching the terminal-attached electric wire from the electric wire fastening portion at the start position, and inserting the terminal of the detached terminal-attached electric wire into the cavity positioned at the end position.

A production device for a wire harness according to a second aspect is one aspect of the production device for a wire harness according to the first aspect. In the production device for a wire harness according to the second aspect, the electric wire arranging member conveying mechanism can move the electric wire arranging member in the first direction between a first standby position at which the entire electric wire arranging member is away from the start position and a first operation position at which part of the electric wire arranging member is positioned at the start position.

A production device for a wire harness according to a third aspect is one aspect of the production device for a wire harness according to the first or second aspect. In the production device for a wire harness according to the third aspect, the connector arranging member conveying mechanism can move the connector arranging member in the second direction between a second standby position at which the entire connector arranging member is away from the end position and a second operation position at which part of the connector arranging member is positioned at the end position.

A production device for a wire harness according to a fourth aspect is one aspect of the production device for a wire harness according to any one of the first to third aspects. In the production device for a wire harness according to the fourth aspect, the terminal insertion mechanism includes at least three gripping portions and a gripping portion conveying mechanism. The gripping portions grip part of the end region of the terminal-attached electric wire respectively at the start position and at least two predetermined intermediate positions. The gripping portion conveying mechanism moves each of the gripping portions between a position at which the gripping portion gripped the part of the end region of the terminal-attached electric wire and a predetermined next position of the intermediate positions and the end position. In this case, while the gripping portions transfer the terminal-attached electric wire at the intermediate positions, the gripping portion conveying mechanism moves the gripping portions, so that the end region of the terminal-attached electric wire moves from the start position via the intermediate positions to the end position.

A production method for a wire harness according to a fifth aspect is a production method for producing a wire harness including the plurality of terminal-attached electric wires and the plurality of connectors. The production method for a wire harness according to the fifth aspect includes steps described below.
(1) A first step is a step in which a mechanism for detachably holding and moving an electric wire arranging member in which a plurality of electric wire fastening portions are arranged in one line, the electric wire fastening portions elastically gripping and fastening the terminal-attached electric wires, at a portion of the electric wires on the side of the terminal, selectively positions the individual electric wire fastening portions at a predetermined start position. In this step, in a state where front ends of the terminals of the terminal-attached electric wires are oriented in a first direction and the electric wire fastening portions are lined up in a second direction that is orthogonal to the first direction, the mechanism for holding and moving the electric wire arranging member holds the electric wire arranging member and moves it in the second direction. Accordingly, the individual electric wire fastening portions are selectively positioned at the start position.
(2) A second step is a step in which a mechanism for detachably holding and moving a connector arranging member supporting the plurality of connectors that are arranged in at least one line detaches the terminal-attached electric wire from the electric wire fastening portion at the start position, and inserts the terminal of the detached terminal-attached electric wire into the cavity positioned at the end position. In this step, in a state where the plurality of connectors are arranged parallel to the direction in which the electric wire fastening portions are lined up, the mechanism for holding and moving the connector arranging member holds the connector arranging member and moves it in the second direction. Accordingly, the individual cavities of the connectors are selectively positioned at the end position in the second direction.
(3) A third step is a step in which a mechanism for gripping and moving part of an end region of each of the terminal-attached electric wires, the end region extending from the terminal to a portion of the electric wire on the side of the terminal, detaches the terminal-attached electric wire from the electric wire fastening portion at the start position, and inserts the terminal of the detached terminal-attached electric wire into the cavity positioned at the end position.

### Advantageous Effects of Invention

According to the above-described aspects, the mechanism for moving the end portion of the terminal-attached electric wire grips and moves the end portion of the terminal-attached electric wire supported at the predetermined position (start position), thereby inserting the terminal of the terminal-attached electric wire into the cavity positioned at the predetermined position (end position).

Furthermore, according to the above-described aspects, the electric wire arranging member can support end portions of all of a plurality of terminal-attached electric wires included in one wire harness set or one sub wire harness set. The mechanism for moving the electric wire arranging member can detachably hold the electric wire arranging member, and position each of the end portions of the terminal-attached electric wires fastened to the electric wire fastening portions of the electric wire arranging member to a predetermined position (start position).

Moreover, according to the above-described aspects, the connector arranging member can support all of a plurality of connectors included in one wire harness set or one sub wire harness set. The mechanism for moving the connector arranging member can detachably hold the connector arranging member, and position each of the cavities of the connectors supported by the connector arranging member to a predetermined position (end position).

That is to say, according to the above-described aspects, for example, an electric wire arranging member module supporting end portions of a plurality of terminal-attached electric wires and a connector arranging member module supporting a plurality of connectors are prepared in units of one wire harness set or one sub wire harness set. The electric wire arranging member module and the connector arranging member module are attached to the production device. Accordingly, the step of inserting terminals of terminal-attached electric wires respectively into cavities of connectors is performed as a single integrated process in units of one wire harness set or one sub wire harness set.

Incidentally, the electric wire arranging member module and the connector arranging member module are larger and heavier than each one of the end portions of the terminal-attached electric wires. Accordingly, use of a mechanism for moving the electric wire arranging member and the connector arranging member in two-dimensional or three-dimensional directions increases the size and the cost of the device. Note that the electric wire arranging member module is a collective term for end portions of a plurality of terminal-attached electric wires and an electric wire arranging member supporting them. Also, the connector arranging member module is a collective term for a plurality of connectors and a connector arranging member supporting them.

According to the above-described aspects, movement of each of the electric wire arranging member and the connector arranging member can be realized merely by a one-dimensional conveying mechanism, and the other conveying mechanisms only have to move the light-weight end portion of each of the terminal-attached electric wires. This aspect contributes to reducing the size and the cost of the device.

Accordingly, the above-described aspects are suited to allow the step of inserting the terminals of the plurality of terminal-attached electric wires respectively into the cavities of the plurality of connectors to be performed as a single integrated process in units of one wire harness set or one sub wire harness set.

Furthermore, according to the second aspect, the electric wire arranging member can be moved in the first direction between a standby position (first standby position) at which the entire electric wire arranging member is away from the start position and an operation position (first operation position) at which part of the electric wire arranging member is positioned at the start position. In this case, the electric wire arranging member can be attached and detached at the standby position at which no interference occurs with the mechanism for moving the end portion of the terminal-attached electric wire. Accordingly, the electric wire arranging member can be easily attached and detached.

In a similar manner, according to the third aspect, the connector arranging member can be moved in the first direction between a standby position (second standby position) at which the entire connector arranging member is away from the end position and an operation position (second operation position) at which part of the connector arranging member is positioned at the end position. In this case, the connector arranging member can be attached and detached at the standby position at which no interference occurs with the mechanism for moving the end portion of the terminal-attached electric wire. Accordingly, the connector arranging member can be easily attached and detached.

According to the fourth aspect, the gripping portion conveying mechanism can perform, in parallel, the operation of moving a gripping portion gripping a terminal-attached electric wire at the last intermediate position to the end position and the operation of moving another gripping portion gripping a terminal-attached electric wire at the start position to the first intermediate position. Accordingly, the production efficiency of wire harnesses can be increased.

### Brief Description of Drawings

FIG. 1 is a schematic perspective view of a wire harness production device 100 according to an embodiment.
FIG. 2 is a schematic plan view of the wire harness production device 100.
FIG. 3 is a schematic plan view of the wire harness production device 100 performing an operation position shifting step.
FIG. 4 is a schematic plan view of the wire harness production device 100 performing a grip starting step.
FIG. 5 is a schematic plan view of the wire harness production device 100 performing a first conveyance primary step.
FIG. 6 is a schematic plan view of the wire harness production device 100 performing a first conveyance secondary step.
FIG. 7 is a schematic plan view of the wire harness production device 100 performing a first transfer step.
FIG. 8 is a schematic plan view of the wire harness production device 100 performing a second conveyance step.
FIG. 9 is a schematic plan view of the wire harness production device 100 performing a second transfer step.
FIG. 10 is a schematic plan view of the wire harness production device 100 performing a third conveyance step.
FIG. 11 is a schematic plan view of the wire harness production device 100 performing a third transfer step.
FIG. 12 is a schematic plan view of the wire harness production device 100 performing a fourth conveyance primary step.
FIG. 13 is a schematic plan view of the wire harness production device 100 performing a fourth conveyance secondary step.
FIG. 14 is a plan view of end portions of terminal-attached electric wires fastened to an electric wire arranging member.

### Description of Embodiments

Hereinafter, embodiments will be described with reference to the attached drawings. The following embodiments are merely examples for working the invention, and are not meant to limit the technical scope of the invention.

### Production Device for Wire Harness

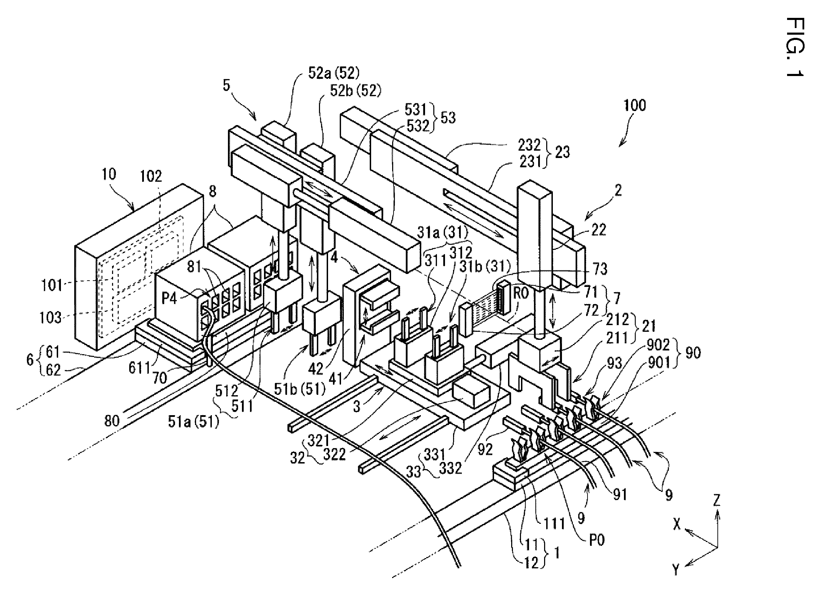

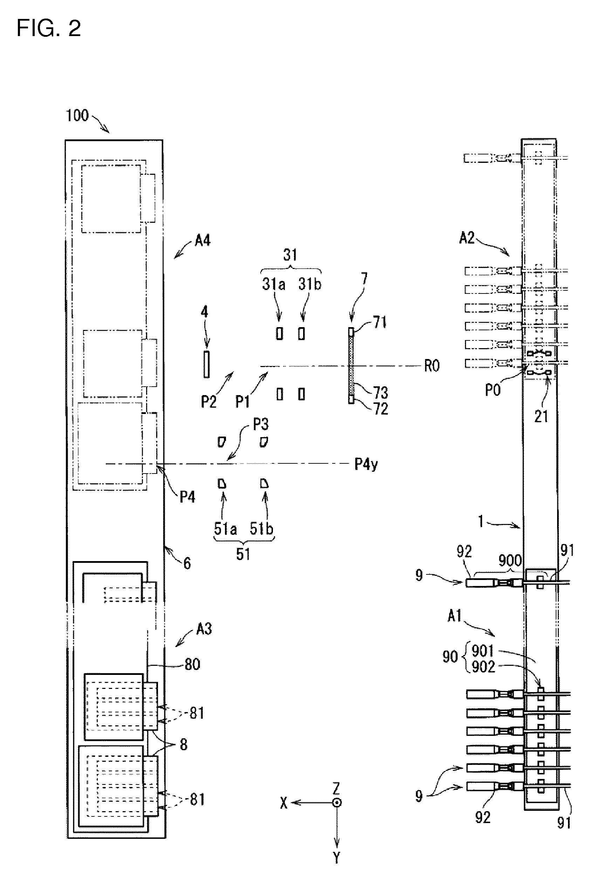

First, the configuration of a wire harness production device 100 according to an embodiment will be described with reference to FIGS. 1 and 2. The wire harness production device 100 is a production device for a wire harness including a plurality of terminal-attached electric wires 9 and a connector 8. In particular, the wire harness production device 100 in this embodiment is a production device for a wire harness including a plurality of terminal-attached electric wires 9 and a plurality of connectors 8.

For the sake of convenience, details such as shapes or sizes of shown constituent elements may not absolutely match between FIGS. 1 and 2. Furthermore, part of the mechanism shown in FIG. 1 is not shown in FIG. 2.

The wire harness production device 100 includes an electric wire arranging member conveying mechanism 1, terminal insertion mechanisms 2 to 5, a connector arranging member conveying mechanism 6, an optical sensor 7, and a control portion 10. The terminal insertion mechanisms 2 to 5 include a first gripping portion-related mechanism 2, a second gripping portion-related mechanism 3, a third gripping portion 4, and a fourth gripping portion-related mechanism 5.

### Terminal-Attached Electric Wire

Each of the terminal-attached electric wires 9 has an electric wire 91 and a terminal 92 connected to an end portion of the electric wire 91. The electric wire 91 is an insulating electric wire having a conductor in the shape of a wire and an insulating coating that coats the conductor. The terminal 92 is a conductive member made of metal or the like. The terminal 92 in this embodiment is a crimp terminal, and has a conductor crimp portion crimped to the conductor of the electric wire 91 and a coating crimp portion crimped to the insulating coating portion of the electric wire 91.

### Connector

Each of the connectors 8 is a member in which a plurality of cavities 81 for accommodating the terminals 92 of the terminal-attached electric wires 9 are formed. The main body forming the external shape of the connector 8 is a non-conductive member, and, for example, is a member made of synthetic resin such as polypropylene (PP), polyethylene (PE), polyvinyl chloride (PVC), polyethylene terephthalate (PET), or polyamide (PA). The main body of the connector 8 may accommodate an unshown bus bar that is brought into contact with the terminals 92 of the terminal-attached electric wires 9 inserted into the cavities 81.

### Electric Wire Arranging Member Conveying Mechanism

The electric wire arranging member conveying mechanism 1 is a mechanism for detachably holding and moving the electric wire arranging member 90. The electric wire arranging member 90 has an elongated base portion 901 and a plurality of electric wire fastening portions 902 that stand upright from the base portion 901. Each of the electric wire fastening portions 902 includes a pair of members that elastically grip and fasten one of the terminal-attached electric wires 9, at a portion of the electric wire 91 on the side of the terminal 92.

The plurality of electric wire fastening portions 902 are arranged in one line on the base portion 901. In the electric wire arranging member 90, the electric wire fastening portions 902 respectively grip and fasten the electric wires 91 of the terminal-attached electric wires 9 in a state where the front ends of the terminals 92 of the terminal-attached electric wires 9 are oriented in the same direction. The direction in which the electric wire fastening portions 902 are lined up is a direction that is orthogonal to the direction in which the front ends of the terminals 92 of the terminal-attached electric wires 9 are oriented.

For example, the pair of members of each electric wire fastening portion 902 are elastically deflectable members, and grip and fasten the electric wire 91 by means of an elastic force generated by the elastic deflection. Alternatively, an elastic force may be applied by an elastic member such as an unshown spring to the pair of members of each electric wire fastening portion 902 in a direction in which they are moved closer to each other.

Typically, the terminals 92 are connected to both end portions of each terminal-attached electric wire 9 fastened to the electric wire arranging member 90. The electric wire arranging member 90 causes the electric wire fastening portions 902 to respectively support the plurality of terminal-attached electric wires 9 at both end portions of the electric wires 91. Accordingly, the electric wire arranging member 90 causes the electric wire fastening portions 902 to grip the electric wires 91 at points that are twice the number of terminal-attached electric wires 9.

The electric wire arranging member conveying mechanism 1 includes a fixing seat 11 and a linear actuator 12. The fixing seat 11 is a portion that detachably holds the electric wire arranging member 90. The fixing seat 11 is provided with an electric wire arranging member lock mechanism 111 having a structure capable of holding and releasing the electric wire arranging member 90. Examples of the electric wire arranging member lock mechanism 111 include well known lock mechanisms that are capable of holding and releasing a target member by means of an engagement structure.

Note that the electric wire arranging member lock mechanism 111 is not shown in FIG. 2.

In the description below, the direction in which the front ends of the terminals 92 of the terminal-attached electric wires 9 supported by the electric wire arranging member 90 are oriented in a state where the electric wire arranging member 90 is held on the fixing seat 11 is taken as a first direction. In this embodiment, the first direction is a horizontal direction.

Furthermore, one direction along the direction in which the electric wire fastening portions 902 are lined up in a state where the electric wire arranging member 90 is held on the fixing seat 11 is taken as a second direction. The second direction is orthogonal to the first direction. In this embodiment, the second direction is also a horizontal direction. In the coordinate axes shown in the drawings, the positive X-axis direction corresponds to the first direction, and the positive Y-axis direction corresponds to the second direction.

Accordingly, the fixing seat 11 holds the electric wire arranging member 90 in a state where the front ends of the terminals 92 of the terminal-attached electric wires 9 supported by the electric wire arranging member 90 are oriented in the first direction and the direction in which the electric wire fastening portions 902 are lined up is the second direction that is orthogonal to the first direction.

The linear actuator 12 moves the fixing seat 11 in the second direction, that is, in the Y-axis direction. The linear actuator 12 moves the fixing seat 11 in the second direction, thereby selectively positioning the individual electric wire fastening portions 902 of the electric wire arranging member 90 at a predetermined start position P0. Examples of the linear actuator 12 include well known ball screw electric actuators.

In a state where the electric wire arranging member 90 is held on the fixing seat 11, the positions of the respective electric wire fastening portions 902, that is, the positions of the respective electric wires 91 fastened to the electric wire fastening portions 902 are known. For example, it is assumed that the plurality of electric wire fastening portions 902 are arranged in one line at equal intervals from a reference position on the fixing seat 11. In this case, by designating the number of electric wire fastening portions from the end to a target electric wire fastening portion 902 to be processed, the movement amount of the linear actuator 12 (the conveyance direction and the conveyance distance of the fixing seat 11) for moving the target electric wire fastening portion 902 and the electric wire 91 fastened thereto to the start position P0 can determined.

As shown in FIG. 2, the electric wire arranging member conveying mechanism 1 can move the electric wire arranging member 90 in the first direction between a first standby position A1 at which the entire electric wire arranging member 90 is away from the start position P0 and a first operation position A2 at which part of the electric wire arranging member 90 is positioned at the start position P0.

The electric wire arranging member 90 that supports the end portions of the plurality of terminal-attached electric wires 9, that is, the module of the electric wire arranging member 90 is prepared, for example, in units of one wire harness set or one sub wire harness set.

In a process before the process performed by the wire harness production device 100, the end portions of the terminal-attached electric wires 9 are respectively fastened manually or by another device to the electric wire fastening portions 902 of the electric wire arranging member 90. Then, the module of the electric wire arranging member 90 is conveyed from the location for the other process to the location of the wire harness production device 100, and is attached to the electric wire arranging member conveying mechanism 1.

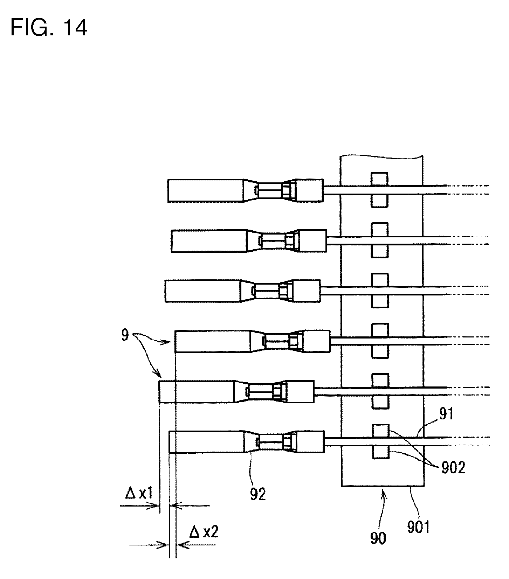

FIG. 14 is a plan view of the end portions of the terminal-attached electric wires 9 fastened to the electric wire arranging member 90. As shown in FIG. 14, in the module of the electric wire arranging member 90, the positions at which the electric wire fastening portions 902 respectively grip the electric wires 91 of the terminal-attached electric wires 9 may vary. In FIG. 14, Δ×1 and Δ×2 refer to variations in the length by which the end portion of the terminal-attached electric wire 9 protrudes from the electric wire fastening portion 902.

The variation in the positions at which the electric wire fastening portions 902 respectively grip the electric wires 91 of the terminal-attached electric wires 9 is caused by, for example, variation in the step of fastening the end portions of the terminal-attached electric wires 9 to the electric wire fastening portions 902, dislocation due to external forces applied to the terminal-attached electric wires 9 during conveyance of the electric wire arranging member 90, or the like.

The variation in the positions at which the electric wire fastening portions 902 respectively grip the electric wires 91 appears as variation in the positions of the end portions of the terminal-attached electric wires 9 arranged by the electric wire arranging member conveying mechanism 1 at the start position P0. It is also conceivable that the positions of the electric wires 91 vary in the depth direction of the electric wire fastening portions 902. Furthermore, due to variation in the precision in connection of the terminals 92 to the end portions of the electric wires 91, the terminals 92 may be slightly inclined with respect to the longitudinal direction of the electric wires 91. Such variation in the inclination also may cause variation in the positions of the terminals 92.

As described later, the wire harness production device 100 has a function of correcting such variation in the positions of the end portions of the terminal-attached electric wires 9 before the terminals 92 of the terminal-attached electric wires 9 reach the cavities 81 of the connectors 8.

In the description below, a region extending from the terminal 92 to a portion of the electric wire 91 on the side of the terminal 92, of each of the terminal-attached electric wires 9, is referred to as an end region 900.

### Connector Arranging Member Conveying Mechanism

The connector arranging member conveying mechanism 6 is a mechanism for detachably holding and moving a connector arranging member 80. The connector arranging member 80 has an unshown holding mechanism for detachably holding the plurality of connectors 8.

The connector arranging member 80 supports the plurality of connectors 8 that are arranged in at least one line. In the example shown in FIGS. 1 and 2, the connector arranging member 80 supports the plurality of connectors 8 that are arranged in one line. However, it is also conceivable that the connector arranging member 80 supports the plurality of connectors 8 that are stacked one on top of the other in two or more layers, each layer having the connectors 8 arranged one line.

The connector arranging member 80 supports the plurality of connectors 8 in a state where the openings of the cavities 81 are oriented in the same direction. More specifically, the connector arranging member 80 supports the plurality of connectors 8 in a state where the openings of the cavities 81 of the plurality of connectors 8 are oriented in the same direction and the direction in which the connectors 8 are lined up is orthogonal to the direction in which the openings of the respective cavities 81 are oriented.

The connector arranging member conveying mechanism 6 includes a fixing seat 61 and a linear actuator 62. The fixing seat 61 is a portion that detachably holds the connector arranging member 80. The fixing seat 61 is provided with a connector arranging member lock mechanism 611 having a structure capable of holding and releasing the connector arranging member 80. Examples of the connector arranging member lock mechanism 611 include lock mechanisms similar to the electric wire arranging member lock mechanism 111.

The fixing seat 61 detachably holds the connector arranging member 80 in a state where the plurality of connectors 8 supported by the connector arranging member 80 are arranged parallel to the direction in which the electric wire fastening portions 902 are lined up. In this case, the fixing seat 61 holds the connector arranging member 80 in a state where the plurality of connectors 8 are arranged in the second direction and the openings of the respective cavities 81 of the plurality of connectors 8 are oriented in the direction (the negative X-axis direction) opposite to the first direction.

Although the fixing seat 61 of the connector arranging member 80 in the example shown in FIG. 2 has a structure into which the connectors 8 are fitted, such a structure is not shown in FIG. 2. The connector arranging member lock mechanism 611 is not shown either in FIG. 2.

The linear actuator 62 moves the fixing seat 61 in the second direction, that is, in the Y-axis direction. The linear actuator 62 moves the fixing seat 61 in the second direction, thereby selectively positioning the individual cavities 81 of the connectors 8 supported by the connector arranging member 80 at a predetermined end position P4. Examples of the linear actuator 62 include well known ball screw electric actuators.

The end position P4 is a position in the second direction. The end position P4 is a position that matches a third intermediate position P3 (described later) in the second direction. That is to say, a coordinate P4y in the second direction indicating the end position P4 matches a coordinate in the second direction indicating the third intermediate position P3.

In a state where the connector arranging member 80 is held on the fixing seat 61, the positions of the respective cavities 81 of the connectors 8 are known. The positions of the respective cavities 81 on the connector arranging member 80 are determined by the positions at which the connectors 8 are held on the fixing seat 61 and the shape specifications of the connectors 8.

For example, in the control portion 10, an identification code of each cavity 81 in each connector 8 and positional data on the fixing seat 61 corresponding to the identification code are set in advance. In this case, by designating the identification code of a target cavity 81, the movement amount of the linear actuator 62 (the conveyance direction and the conveyance distance of the fixing seat 61) for moving the target cavity 81 to the end position P4 can be determined by referring to the positional data in the second direction of the cavity 81 corresponding to the identification code.

Note that the target cavity 81 is a cavity into which the terminal 92 is to be inserted, and is sequentially selected from among the plurality of cavities 81 of the plurality of connectors 8 supported by the connector arranging member 80. If the plurality of cavities 81 are arranged in a third direction at the end position P4, the target cavity 81 is one of the plurality of cavities 81 arranged in the third direction.

As shown in FIG. 2, the connector arranging member conveying mechanism 6 can move the connector arranging member 80 in the first direction between a second standby position A3 at which the entire connector arranging member 80 is away from the end position P4 and a second operation position A4 at which part of the connector arranging member 80 is positioned at the end position P4.

As shown in FIG. 2, the direction of the first standby position A1 viewed from the first operation position A2 is the same as the direction of the second standby position A3 viewed from the second operation position A4. In this embodiment, the second standby position A3 is positioned in the first direction (the positive X-axis direction) viewed from the first standby position A1.

The connector arranging member 80 that supports the plurality of connectors 8, that is, the module of the connector arranging member 80 is prepared, for example, in units of one wire harness set or one sub wire harness set.

In a process before the process performed by the wire harness production device 100, the plurality of connectors 8 are attached to the connector arranging member 80 produced in advance according to the shape specifications of the connectors 8. Then, the module of the connector arranging member 80 is conveyed from the location for the other process to the location of the wire harness production device 100, and is attached to the connector arranging member conveying mechanism 6.

### Optical Sensor

The optical sensor 7 is a transmission-type optical sensor, and has a light-emitting portion 71 and a light-receiving portion 72. The light-emitting portion 71 emits detection light 73 along a plane orthogonal to a straight route R0 extending through the start position P0 when viewed from the third direction that is orthogonal to the first direction and the second direction. The detection light 73 is sheet light along the plane.

In the coordinate axes shown in the drawings, the positive Z-axis direction corresponds to the third direction. In this embodiment, the third direction is an upper direction on the vertical axis.

The light-receiving portion 72 of the optical sensor 7 receives the detection light 73. The optical sensor 7 is a sensor that detects an object blocking the detection light 73 by detecting whether or not the light receiving level of the light-receiving portion 72 is lower than a predetermined level set in advance. In the wire harness production device 100, the optical sensor 7 detects the front end portion of the terminal 92 of the terminal-attached electric wire 9 blocking the detection light 73.

### Terminal Insertion Mechanisms

The terminal insertion mechanisms 2 to 5 are mechanisms that insert each of the terminals 92 of the terminal-attached electric wires 9 into the target cavity 81 positioned at the end position P4. The terminal insertion mechanisms 2 to 5 grip and move part of the end region 900 of the terminal-attached electric wire 9, thereby detaching the end region 900 of the terminal-attached electric wire 9 from the electric wire fastening portion 902 at the start position P0, and inserting the terminal 92 of the end region 900 of the detached terminal-attached electric wire 9 into the target cavity 81 positioned at the end position P4.

For the sake of convenience, in FIG. 2, only those portions of the terminal insertion mechanisms 2 to 5 that grip part of the end region 900 of the terminal-attached electric wire 9 are schematically shown, and the other portions of the mechanisms are not shown.

### First Gripping Portion-Related Mechanism

The first gripping portion-related mechanism 2 of the terminal insertion mechanisms 2 to 5 is a mechanism for gripping and moving part of the end region 900 of the terminal-attached electric wire 9, thereby moving the end region 900 from the start position P0 to a predetermined first intermediate position P1.

The first gripping portion-related mechanism 2 includes a first gripping portion 21, a third-direction conveying mechanism 22, and a first-direction conveying mechanism 23.

The first gripping portion 21 is a mechanism for gripping part of the end region 900 of the terminal-attached electric wire 9 in a state where the front end of the terminal 92 is oriented in the first direction, from both sides in the second direction, at the start position P0.

The first gripping portion 21 has a pair of first opposing members 211 and a first clamping actuator 212 that moves the pair of first opposing members 211 in the second direction (Y-axis direction) closer to and away from each other.

Each of the pair of first opposing members 211 has branched portions that are branched from the base into two portions. The branched portions of the pair of first opposing members 211 grip and support the electric wire 91 of the terminal-attached electric wire 9, at two points on respective sides of the portion gripped by the electric wire fastening portion 902.

The first clamping actuator 212 moves the pair of first opposing members 211 in the second direction closer to and away from each other. Accordingly, the first clamping actuator 212 switches the state of the pair of first opposing members 211 between the state of gripping the electric wire 91 and the state of not gripping the electric wire 91. Examples of the first clamping actuator 212 include solenoid actuators and ball screw electric actuators.

The third-direction conveying mechanism 22 of the first gripping portion-related mechanism 2 is a mechanism for moving the first gripping portion 21 in the third direction. Furthermore, the first-direction conveying mechanism 23 of the first gripping portion-related mechanism 2 is a mechanism for moving the first gripping portion 21 in the first direction.

The third-direction conveying mechanism 22 and the first-direction conveying mechanism 23 move the first gripping portion 21 along a plane that extends through the start position P0 and along the first direction and the third direction. Accordingly, the first intermediate position P1 is located in the plane that extends through the start position P0 and along the first direction and the third direction.

In this embodiment, the third-direction conveying mechanism 22 moves the first gripping portion 21 in the third direction while directly supporting it, and the first-direction conveying mechanism 23 moves the first gripping portion 21 in the first direction while supporting the third-direction conveying mechanism 22.

For example, the first-direction conveying mechanism 23 includes a sliding support portion 231 that supports the third-direction conveying mechanism 22 so as to be movable in the first direction, and a linear actuator 232 that moves the third-direction conveying mechanism 22 in the third direction. Examples of the third-direction conveying mechanism 22 and the linear actuator 232 include well known ball screw electric actuators.

While the third-direction conveying mechanism 22 and the first-direction conveying mechanism 23 are moving the end region 900 of the terminal-attached electric wire 9 from the start position P0 to the first intermediate position P1, the first-direction conveying mechanism 23 moves the end region 900 of the terminal-attached electric wire 9 along the straight route R0. More specific operations of the third-direction conveying mechanism 22 and the first-direction conveying mechanism 23 will be described later.

Note that the third-direction conveying mechanism 22 and the first-direction conveying mechanism 23 of the first gripping portion-related mechanism 2 are an example of a first gripping portion conveying mechanism for moving the first gripping portion 21, thereby moving the end region 900 of the terminal-attached electric wire 9 to the first intermediate position P1.

### Second Gripping Portion-Related Mechanism

The second gripping portion-related mechanism 3 of the terminal insertion mechanisms 2 to 5 is a mechanism for taking over support of the end region 900 of the terminal-attached electric wire 9, from the first gripping portion 21, at the first intermediate position P1. Furthermore, the second gripping portion-related mechanism 3 temporarily transfers support of the terminal 92 of the terminal-attached electric wire 9 between the second gripping portion-related mechanism 3 and the third gripping portion 4, and then passes the terminal-attached electric wire 9 to the fourth gripping portion-related mechanism 5.

The second gripping portion-related mechanism 3 includes a second gripping portion 31, a first-direction conveying mechanism 32, and a second-direction conveying mechanism 33.

The second gripping portion 31 grips part of the terminal 92 and part of the electric wire 91 in the end region 900 of the terminal-attached electric wire 9 gripped by the first gripping portion 21, from both sides in the second direction (Y-axis direction), at the first intermediate position P1. The second gripping portion 31 takes over support of the end region 900 of the terminal-attached electric wire 9, from the first gripping portion 21, at the first intermediate position P1.

The second gripping portion 31 includes a front second gripping portion 31a and a rear second gripping portion 31b. Each of the front second gripping portion 31a and the rear second gripping portion 31b has a pair of second opposing members 311 and a second clamping actuator 312 that moves the pair of second opposing members 311 in the second direction (Y-axis direction) closer to and away from each other.

The pair of second opposing members 311 of the front second gripping portion 31a grip and support part of the terminal 92 in the end region 900 of the terminal-attached electric wire 9. Meanwhile, the pair of second opposing members 311 of the rear second gripping portion 31b grip and support part of the electric wire 91 in the end region 900 of the terminal-attached electric wire 9.

Since the second gripping portion 31 has the front second gripping portion 31a and the rear second gripping portion 31b, the second gripping portion 31 can independently perform the operation of gripping the terminal 92 of the terminal-attached electric wire 9 and the operation of releasing the gripping, and the operation of gripping the electric wire 91 of the terminal-attached electric wire 9 and the operation of releasing the gripping.

The second clamping actuator 312 moves the pair of second opposing members 311 in the second direction closer to and away from each other. Accordingly, the second clamping actuator 312 switches the state of the pair of second opposing members 311 between the state of gripping the end region 900 of the terminal-attached electric wire 9 and the state of not gripping the end region 900. Examples of the second clamping actuator 312 include solenoid actuators and ball screw electric actuators.

The first-direction conveying mechanism 32 of the second gripping portion-related mechanism 3 is a mechanism for moving the second gripping portion 31 in the first direction. Furthermore, the second-direction conveying mechanism 33 of the second gripping portion-related mechanism 3 is a mechanism for moving the second gripping portion 31 in the second direction.

The first-direction conveying mechanism 32 moves the second gripping portion 31 from the first intermediate position P1 to a predetermined second intermediate position P2. Furthermore, the second-direction conveying mechanism 33 moves the second gripping portion 31 from the second intermediate position P2 to a predetermined third intermediate position P3. Furthermore, the first-direction conveying mechanism 32 and the second-direction conveying mechanism 33 move the second gripping portion 31 from the third intermediate position P3 to the first intermediate position P1.

In this embodiment, the first-direction conveying mechanism 32 includes a sliding support portion 321 that supports the second gripping portion 31 so as to be movable in the first direction, and a linear actuator 322 that moves the sliding support portion 321 in the first direction.

Moreover, in this embodiment, the second-direction conveying mechanism 33 includes a sliding support portion 331 that supports the second gripping portion 31 and the first-direction conveying mechanism 32 so as to be movable in the second direction, and a linear actuator 332 that moves the sliding support portion 331 in the second direction.

### Third Gripping Portion

The third gripping portion 4 of the terminal insertion mechanisms 2 to 5 grips part of the terminal 92 in the end region 900 of the terminal-attached electric wire 9 gripped by the second gripping portion 31, from both sides in the third direction, at the predetermined second intermediate position P2. The third gripping portion 4 temporarily takes over support of the terminal 92 of the terminal-attached electric wire 9 from the second gripping portion 31, and then passes it to the second gripping portion 31.

The third gripping portion 4 has a pair of third opposing members 41 and a third clamping actuator 42 that moves the pair of third opposing members 41 in the third direction (Z-axis direction) closer to and away from each other. In this embodiment, the third gripping portion 4 is fixed.

The pair of third opposing members 41 grip and support part of the terminal 92 in the end region 900 of the terminal-attached electric wire 9.

The third clamping actuator 42 moves the pair of third opposing members 41 in the third direction closer to and away from each other. Accordingly, the third clamping actuator 42 switches the state of the pair of third opposing members 41 between the state of gripping the terminal 92 of the terminal-attached electric wire 9 and the state of not gripping the terminal 92. Examples of the third clamping actuator 42 include solenoid actuators and ball screw electric actuators.

Note that the first-direction conveying mechanism 32 of the second gripping portion-related mechanism 3 is an example of a second-third gripping portion positional relationship change mechanism for moving at least one of the second gripping portion 31 and the third gripping portion 4 in the first direction.

That is to say, the first-direction conveying mechanism 32 changes the positional relationship between the terminal 92 of the terminal-attached electric wire 9 gripped by the second gripping portion 31 and the third gripping portion 4, between a first positional relationship and a second positional relationship. The first positional relationship is a positional relationship in which the third gripping portion 4 is away from the terminal 92 in the first direction. The second positional relationship is a positional relationship in which the terminal 92 is positioned at the gripping position of the third gripping portion 4.

In this embodiment, when the end region 900 of the terminal-attached electric wire 9 is positioned at the first intermediate position P1, the positional relationship between the terminal 92 and the third gripping portion 4 is the first positional relationship. Furthermore, when the end region 900 of the terminal-attached electric wire 9 is positioned at the second intermediate position P2, the positional relationship between the terminal 92 and the third gripping portion 4 is the second positional relationship.

### Fourth Gripping Portion-Related Mechanism

The fourth gripping portion-related mechanism 5 of the terminal insertion mechanisms 2 to 5 is a mechanism for taking over support of the end region 900 of the terminal-attached electric wire 9, from the second gripping portion 31, at the predetermined third intermediate position P3. Furthermore, the fourth gripping portion-related mechanism 5 grips and moves the end region 900 of the terminal-attached electric wire 9, thereby inserting the terminal 92 of the terminal-attached electric wire 9 into the cavity 81 of the connector 8 positioned at the end position P4.

The fourth gripping portion-related mechanism 5 includes a fourth gripping portion 51, a third-direction conveying mechanism 52, and a first-direction conveying mechanism 53.

The fourth gripping portion 51 grips part of the terminal 92 and part of the electric wire 91 in the end region 900 of the terminal-attached electric wire 9 that was passed from the third gripping portion 4 to the second gripping portion 31 and is gripped by the second gripping portion 31, at the third intermediate position P3. The fourth gripping portion 51 takes over support of the end region 900 of the terminal-attached electric wire 9, from the second gripping portion 31, at the third intermediate position P3.

The fourth gripping portion 51 includes a front fourth gripping portion 51a and a rear fourth gripping portion 51b. Each of the front fourth gripping portion 51a and the rear fourth gripping portion 51b has a pair of fourth opposing members 511 and a fourth clamping actuator 512 that moves the pair of fourth opposing members 511 in the second direction (Y-axis direction) closer to and away from each other.

The pair of fourth opposing members 511 of the front fourth gripping portion 51a grip and support part of the terminal 92 in the end region 900 of the terminal-attached electric wire 9. Meanwhile, the pair of fourth opposing members 511 of the rear fourth gripping portion 51b grip and support part of the electric wire 91 in the end region 900 of the terminal-attached electric wire 9.

Since the fourth gripping portion 51 has the front fourth gripping portion 51a and the rear fourth gripping portion 51b, the fourth gripping portion 51 can independently perform the operation of gripping the terminal 92 of the terminal-attached electric wire 9 and the operation of releasing the gripping, and the operation of gripping the electric wire 91 of the terminal-attached electric wire 9 and the operation of releasing the gripping.

The fourth clamping actuator 512 moves the pair of fourth opposing members 511 in the second direction closer to and away from each other. Accordingly, the fourth clamping actuator 512 switches the state of the pair of fourth opposing members 511 between the state of gripping the end region 900 of the terminal-attached electric wire 9 and the state of not gripping the end region 900. Examples of the fourth clamping actuator 512 include solenoid actuators and ball screw electric actuators.

The third-direction conveying mechanism 52 of the fourth gripping portion-related mechanism 5 is a mechanism for moving the fourth gripping portion 51 in the third direction. The third-direction conveying mechanism 52 includes a front third-direction conveying mechanism 52a that moves the front fourth gripping portion 51a in the third direction, and a rear third-direction conveying mechanism 52b that moves the rear fourth gripping portion 51b in the third direction.

Since the third-direction conveying mechanism 52 of the fourth gripping portion-related mechanism 5 has the front third-direction conveying mechanism 52a and the rear third-direction conveying mechanism 52b, the third-direction conveying mechanism 52 can independently perform the operation of moving the front fourth gripping portion 51a in the third direction and the operation of moving the rear fourth gripping portion 51b in the third direction.

In the fourth gripping portion-related mechanism 5, the third-direction conveying mechanism 52 moves the fourth gripping portion 51 in the third direction (the positive Z-axis direction) by a distance difference in the third direction between the known third intermediate position P3 and the known position of the target cavity 81 located at the end position P4. It will be appreciated that, if the distance difference is zero, the third-direction conveying mechanism 52 does not move the fourth gripping portion 51.

Furthermore, in the fourth gripping portion-related mechanism 5, the first-direction conveying mechanism 53 moves the fourth gripping portion 51 in the first direction (the positive X-axis direction) by a distance corresponding to the sum of a distance difference in the first direction between the known third intermediate position P3 and the known position of the opening of the target cavity 81 located at the end position P4 and the depth dimension of the target cavity 81.

With the above-described operations of the third-direction conveying mechanism 52 and the first-direction conveying mechanism 53, the terminal 92 of the terminal-attached electric wire 9 is moved from the third intermediate position P3, and is inserted into the target cavity 81 located at the end position P4.

In this embodiment, the third-direction conveying mechanism 52 includes the sliding support portion 321 that supports the second gripping portion 31 so as to be movable in the first direction, and the linear actuator 322 that moves the sliding support portion 321 in the first direction.

In this embodiment, the third-direction conveying mechanism 52 moves the fourth gripping portion 51 in the third direction while directly supporting it, and the first-direction conveying mechanism 53 moves the fourth gripping portion 51 in the first direction while supporting the third-direction conveying mechanism 52.

For example, the first-direction conveying mechanism 53 includes a sliding support portion 531 that supports the third-direction conveying mechanism 52 so as to be movable in the first direction, and a linear actuator 532 that moves the third-direction conveying mechanism 52 in the third direction. Examples of the third-direction conveying mechanism 52 and the linear actuator 532 include well known ball screw electric actuators.

Note that the third-direction conveying mechanism 52 and the first-direction conveying mechanism 53 of the fourth gripping portion-related mechanism 5 are an example of a fourth gripping portion conveying mechanism for moving the fourth gripping portion 51, thereby inserting the terminal 92 of the terminal-attached electric wire 9 into the cavity 81 of the connector 8.

Furthermore, the second-direction conveying mechanism 33 of the second gripping portion-related mechanism 3 is an example of a second gripping portion conveying mechanism for moving the second gripping portion 31 in the second direction. The second-direction conveying mechanism 33 moves the second gripping portion 31 between the second intermediate position P2 at which support of the terminal 82 is taken over from the third gripping portion 4 and the third intermediate position P3 at which support of the terminal-attached electric wire 9 is passed to the fourth gripping portion 51.

As shown in FIG. 1, the wire harness production device 100 further includes an electric wire catch portion 70. The electric wire catch portion 70 is driven by an unshown drive mechanism to be displaced between the end position P4 and the third intermediate position P3, thereby catching the electric wires 91 of the terminal-attached electric wires 9 whose terminals 92 have been already inserted into the cavities 81, and moving them away from the end position P4. Accordingly, a situation is prevented in which the electric wires 91 extending from the connectors 8 interfere with new insertion of the terminal 92 of the terminal-attached electric wire 9.

### Control Portion

The control portion 10 is a portion that controls the actuators of the electric wire arranging member conveying mechanism 1, the terminal insertion mechanisms 2 to 5, and the connector arranging member conveying mechanism 6, while referring to detection signals of the optical sensor 7. Note that the control portion 10 is not shown in FIG. 2.

The control portion 10 includes a calculating portion 101, a storage portion 102, and a signal interface 103. The calculating portion 101 is electrically connected to the storage portion 102 and the signal interface 103.

The calculating portion 101 is a device or a circuit including a CPU (central processing unit) that executes processing of deriving control commands to the actuators according to control programs stored in advance in the storage portion 102.

The storage portion 102 is a non-volatile memory that stores control programs and other data referred to by the calculating portion 101. For example, the storage portion 102 stores not only the control programs but also data such as predetermined route conveyance data, terminal-cavity correspondence data, electric wire positional data, and cavity positional data.

The predetermined route conveyance data includes data indicating the operation procedure for the actuator of the first gripping portion-related mechanism 2 for moving the end region 900 of the terminal-attached electric wire 9 along a predetermined route from the start position P0 to the straight route R0. Furthermore, the predetermined route conveyance data includes data indicating the operation procedure for the actuators of the second gripping portion-related mechanism 3 for moving the end region 900 along a predetermined route from the position at which the terminal 92 is detected by the optical sensor 7 via the first intermediate position P1 and the second intermediate position P2 to the third intermediate position P3.

The terminal-cavity correspondence data is data indicating the correspondence relationship between the identification code of each of the electric wire fastening portions 902 that grip the electric wires 91 in the electric wire arranging member 90 and the identification code of each of the cavities 81 into which the terminals 92 are to be inserted. Furthermore, the terminal-cavity correspondence data indicates the order of the electric wire fastening portions 902 to be positioned at the start position P0.

The electric wire positional data includes data necessary to specify the positions of the respective electric wire fastening portions 902 in the electric wire arranging member 90. That is to say, the electric wire positional data includes data necessary to specify the movement amount of the linear actuator 12 of the electric wire arranging member conveying mechanism 1 for moving each of the electric wire fastening portions 902 to the start position P0.

The cavity positional data includes data necessary to specify the positions in the second direction (Y-axis direction) and the third direction (Z-axis direction) and the depth dimensions of the respective cavities 81 of the connectors 8 supported by the connector arranging member 80. In this case, all positions in the first direction (X-axis direction) of the openings of the respective cavities 81 are the same known position.

That is to say, the data indicating the positions in the second direction of the respective cavities 81 in the cavity positional data is data necessary to specify the movement amount of the linear actuator 62 of the connector arranging member conveying mechanism 6 for moving each of the cavities 81 of the connectors 8 supported by the connector arranging member 80 to the end position P4.

The data indicating the positions in the third direction and the depth dimensions of the respective cavities 81 in the cavity positional data is data necessary to specify the movement amounts of the third-direction conveying mechanism 52 and the first-direction conveying mechanism 53 of the fourth gripping portion-related mechanism 5 for moving each of the terminals 92 of the terminal-attached electric wires 9 from the third intermediate position P3 to the target cavity 81.

The signal interface 103 inputs a detection signal from the light-receiving portion 72 of the optical sensor 7, and transmits the detection signal to the calculating portion 101. Furthermore, the signal interface 103 inputs a control command for the actuators derived by the calculating portion 101, converts the control command into a drive signal for the corresponding actuator, and outputs the drive signal.

### Production Process for Wire Harness

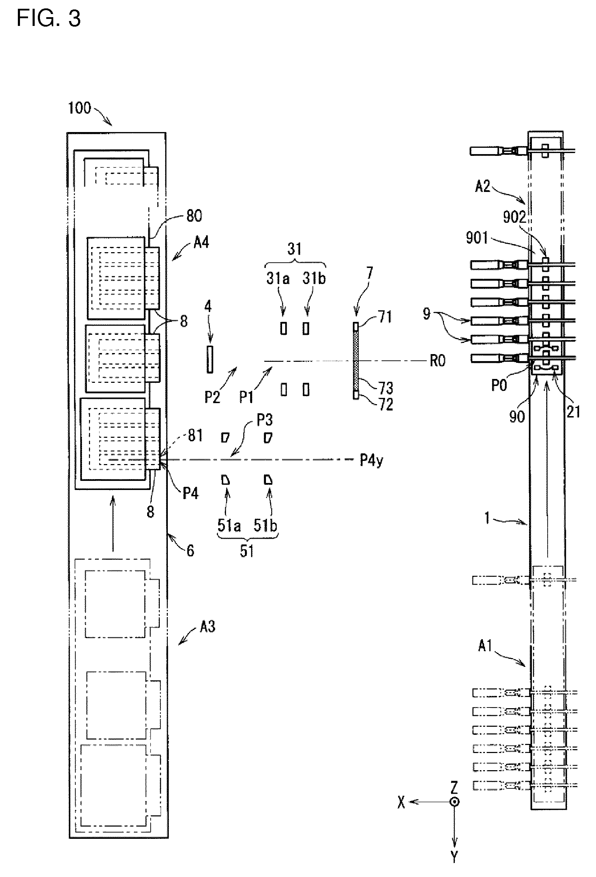

Next, an example of the wire harness production process that is performed by the wire harness production device 100 will be described with reference to FIGS. 3 to 12. In the production process for a wire harness including the plurality of terminal-attached electric wires 9 and the plurality of connectors 8 connected to the end portions of the terminal-attached electric wires 9, the wire harness production device 100 performs a terminal inserting step of inserting the terminals 92 of the terminal-attached electric wires 9 respectively into the cavities 81 of the connectors 8.

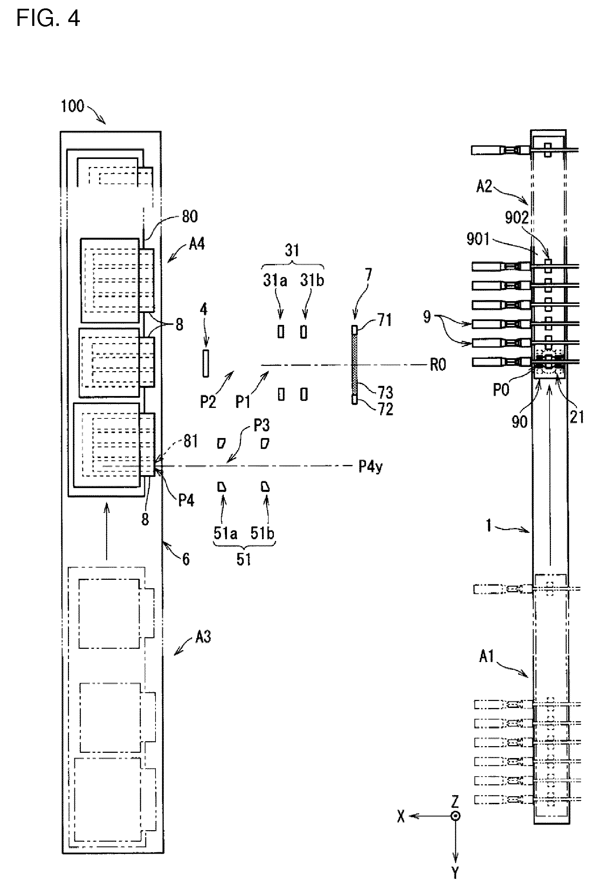

For the sake of convenience, in FIGS. 3 to 12, only those portions of the of the terminal insertion mechanisms 2 to 5 that grip part of the end region 900 of the terminal-attached electric wire 9 are schematically shown, and the other portions of the mechanisms are not shown. The electric wire arranging member conveying mechanism 1 and the connector arranging member conveying mechanism 6 are not shown either in FIGS. 4 to 12.

Furthermore, for the sake of convenience, FIGS. 4 to 12 show the first gripping portion 21, the second gripping portion 31, the third gripping portion 4, and the fourth gripping portion 51 such that the state of gripping the end region 900 of the terminal-attached electric wire 9 is marked in black and the state of not gripping the end region 900 of the terminal-attached electric wire 9 is marked in white.

The terminal inserting step includes a start/end position determining step, a grip starting step, a first conveyance primary step, a first conveyance secondary step, a first transfer step, a second conveyance step, a second transfer step, a third conveyance step, a third transfer step, a fourth conveyance primary step, and a fourth conveyance secondary step.

The mechanisms that operate in these steps operate according to control commands of the calculating portion 101 that executes control programs stored in the storage portion 102 in the control portion 10. At that time, the calculating portion 101 of the control portion 10 causes the mechanisms to perform the above-mentioned steps by outputting control signals via the signal interface 103 to the mechanisms while referring to various types of data stored in the storage portion 102 and detection results of the optical sensor 7.

Before the above-described steps are performed, in a state where the electric wire arranging member conveying mechanism 1 causes the fixing seat 11 to be disposed at the first standby position A1, the module of the electric wire arranging member 90 is fixed to the fixing seat 11. Furthermore, in a state where the connector arranging member conveying mechanism 6 causes the fixing seat 61 to be disposed at the second standby position A3, the module of the connector arranging member 80 is fixed to the fixing seat 61.

### Start/End Position Determining Step

The start/end position determining step includes a start position determining step and an end position determining step.

As shown in FIG. 3, the start position determining step is a step in which the electric wire arranging member conveying mechanism 1 selectively positions the individual electric wire fastening portions 902 of the electric wire arranging member 90 at the start position P0. In this step, the control portion 10 sequentially specifies the target electric wire fastening portion 902 that is to be moved to the start position P0, based on the terminal-cavity correspondence data in the storage portion 102.

Then, if the electric wire arranging member conveying mechanism 1 moves the electric wire arranging member 90 in the second direction, the target electric wire fastening portion 902 that is specified by the control portion 10 is positioned at the start position P0.

Meanwhile, the end position determining step is a step in which the connector arranging member conveying mechanism 6 moves the connector arranging member 80 in the second direction, thereby selectively positioning the individual cavities 81 of the connectors 8 at the end position P4 in the second direction. In this step, the control portion 10 sequentially specifies the target cavity 81 that is to be moved to the end position P4, based on the terminal-cavity correspondence data in the storage portion 102.

Then, if the connector arranging member conveying mechanism 6 moves the connector arranging member 80 in the second direction, the target cavity 81 that is specified by the control portion 10 is positioned at the end position P4. If the previous target cavity 81 and the current target cavity 81 are arranged in a line in the third direction, the connector arranging member conveying mechanism 6 does not move the connector arranging member 80 in this step.

For example, the start position determining step and the end position determining step may be performed in parallel. Alternatively, these steps may be sequentially performed.

Each time the control portion 10 sequentially specifies the target electric wire fastening portion 902, the start/end position determining step is performed. Each time the start/end position determining step is performed, a grip starting step, a first conveyance primary step, a first conveyance secondary step, a first transfer step, a second conveyance step, a second transfer step, a third conveyance step, a third transfer step, a fourth conveyance primary step, and a fourth conveyance secondary step, which will be described later, are performed.

The step shown in FIG. 3 is a first start/end position determining step, and this step is also an operation position shifting step.

As shown in FIG. 3, the operation position shifting step includes a first operation position shifting step in which the electric wire arranging member conveying mechanism 1 moves the electric wire arranging member 90 supporting the end regions 900 of the plurality of terminal-attached electric wires 9 from the first standby position A1 to the first operation position A2.

Moreover, the operation position shifting step includes a second operation position shifting step in which the connector arranging member conveying mechanism 6 moves the connector arranging member 80 supporting the plurality of connectors 8 from the second standby position A3 to the second operation position A4.

For example, the first operation position moving step and the second operation position moving step may be performed in parallel. Alternatively, these steps may be sequentially performed.

### Grip Starting Step

As shown in FIG. 4, the grip starting step is a step in which the first gripping portion 21 grips part of the end region 900 of the terminal-attached electric wire 9 in a state where the front end of the terminal 92 is oriented in the first direction, at the predetermined start position P0. In this embodiment, the first gripping portion 21 grips two points of the electric wire 91 in the end region 900 of the terminal-attached electric wire 9, from both sides in the second direction.

The two points of the electric wire 91 gripped by the first gripping portion 21 are two points on respective sides of the portion gripped by the electric wire fastening portion 902. Accordingly, when the first gripping portion 21 gripping the electric wire 91 moves in the third direction, the electric wire 91 easily comes off the electric wire fastening portion 902 smoothly without being bent.

### First Conveyance Primary Step

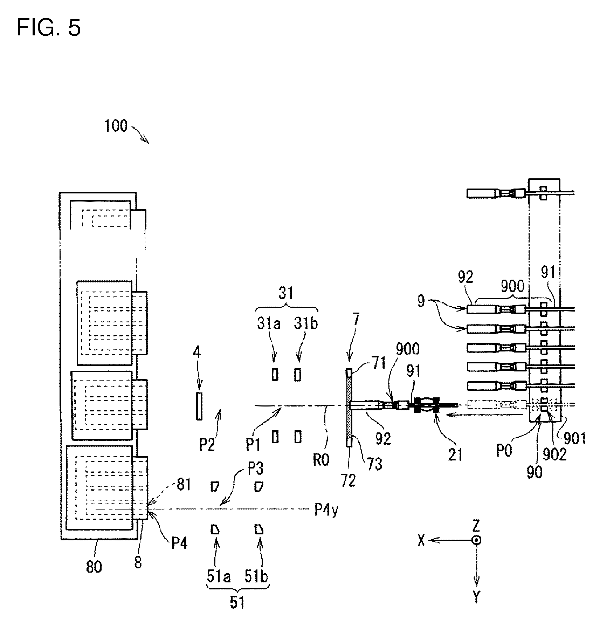

As shown in FIG. 5, the first conveyance primary step is a step in which, after the third-direction conveying mechanism 22 of the first gripping portion-related mechanism 2 moves the first gripping portion 21 in the third direction by a predetermined distance, the first-direction conveying mechanism 23 of the first gripping portion-related mechanism 2 moves the first gripping portion 21 along the straight route R0 in the first direction.

In this step, the first-direction conveying mechanism 23 moves the first gripping portion 21 along the predetermined straight route R0 in the first direction, and, if the optical sensor 7 detects the front end portion of the terminal 92 during the movement, the step performed by the first-direction conveying mechanism 23 and the third-direction conveying mechanism 22 advances to the next first conveyance secondary step.

For example, in this step, the first-direction conveying mechanism 23 of the first gripping portion-related mechanism 2 moves the first gripping portion 21 along the predetermined straight route R0 by a predetermined first distance at a first speed. Note that the first distance is set to a range in which the terminal 92 does not reach the detection light 73 regardless of variation in the initial positions of the terminal-attached electric wires 9. Subsequently, the first-direction conveying mechanism 23 moves the first gripping portion 21 along the predetermined straight route R0 at a second speed, which is lower than the first speed, until the optical sensor 7 detects the front end portion of the terminal 92.

The above-described operation prevents a situation in which a positioning error of the terminal 92 becomes too large to ignore due to a delay in feedback control for controlling the first-direction conveying mechanism 23 in response to detection results of the optical sensor 7. Furthermore, the above-described operation shortens the time necessary to perform the step by increasing the conveyance speed of the terminal-attached electric wire 9, while suppressing a positioning error of the terminal 92.

When at least the first conveyance primary step is being performed, the step of the optical sensor 7 detecting an object blocking the detection light 73 (the front end portion of the terminal 92) is performed.

### First Conveyance Secondary Step

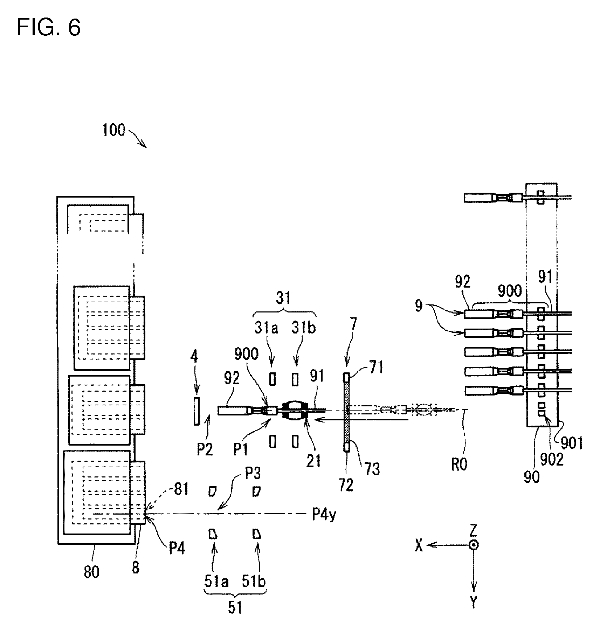

As shown in FIG. 6, the first conveyance secondary step is a step in which, after the optical sensor 7 detects the terminal 92, the first-direction conveying mechanism 23 of the first gripping portion-related mechanism 2 moves the first gripping portion 21 along the straight route R0 in the first direction by a predetermined distance, and then the third-direction conveying mechanism 22 of the first gripping portion-related mechanism 2 moves the first gripping portion 21 by a predetermined distance in the direction (the negative Z-axis direction) opposite to the third direction. With this step, the end region 900 of the terminal-attached electric wire 9 is moved to the first intermediate position P1.

### First Transfer Step

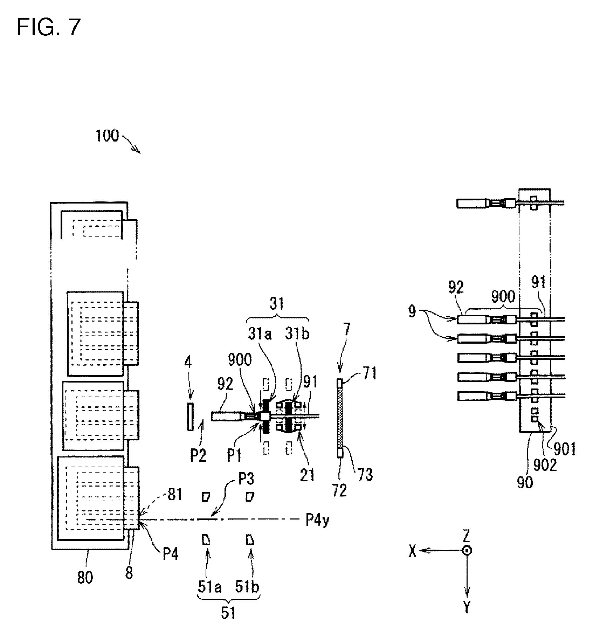

As shown in FIG. 7, the first transfer step is a step in which the second gripping portion 31 grips part of the terminal 92 and part of the electric wire 91 in the end region 900 of the terminal-attached electric wire 9 gripped by the first gripping portion 21, from both sides in the second direction, at the first intermediate position P1.

Moreover, in this step, the first gripping portion 21 releases the gripping of the electric wire 91. Accordingly, the second gripping portion 31 takes over support of the terminal-attached electric wire 9 from the first gripping portion 21.

### Second Conveyance Step

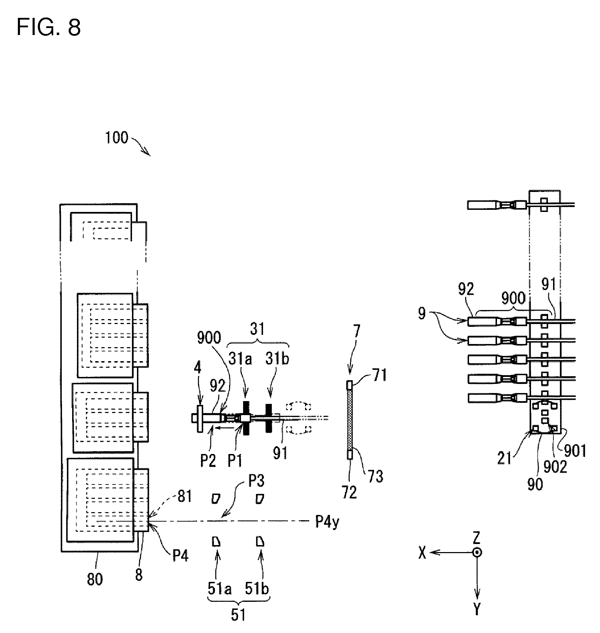

As shown in FIG. 8, the second conveyance step is a step in which the first-direction conveying mechanism 32 of the second gripping portion-related mechanism 3 moves the second gripping portion 31 by a predetermined distance in the first direction. In this step, the first-direction conveying mechanism 32 moves the end region 900 of the terminal-attached electric wire 9 from the first intermediate position P1 that is away from the third gripping portion 4 to the second intermediate position P2 that is the gripping position of the third gripping portion 4.

### Second Transfer Step

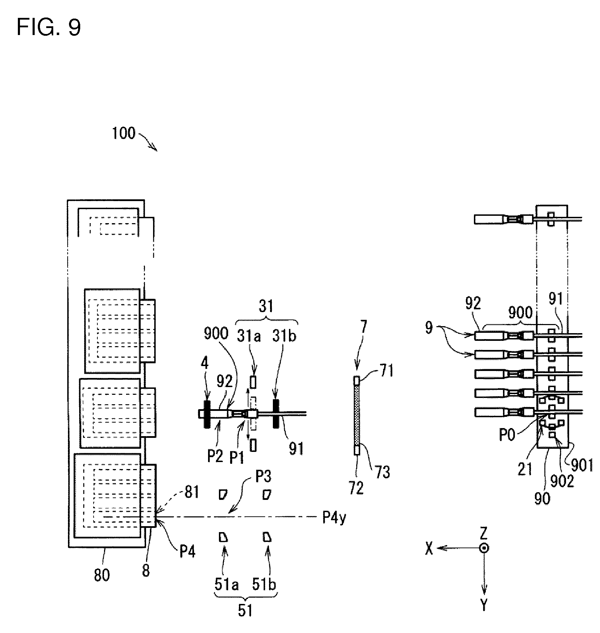

As shown in FIG. 9, the second transfer step is a step in which the third gripping portion 4 temporarily grips part of the terminal 92 in the end region 900 of the terminal-attached electric wire 9 gripped by the second gripping portion 31, from both sides in the third direction, at the second intermediate position P2.

Moreover, in this step, the front second gripping portion 31a temporarily releases the gripping of the terminal 92 when the third gripping portion 4 grips the terminal 92, and again grips the terminal 92. That is to say, the third gripping portion 4 temporarily takes over support of the terminal 92 of the terminal-attached electric wire 9 from the second gripping portion 31, and then passes it to the second gripping portion 31.

In this step, it is also conceivable that, as in the case of the front second gripping portion 31a, the rear second gripping portion 31b temporarily releases the gripping of the electric wire 91 when the third gripping portion 4 grips the terminal 92, and again grips the electric wire 91.

### Third Conveyance Step

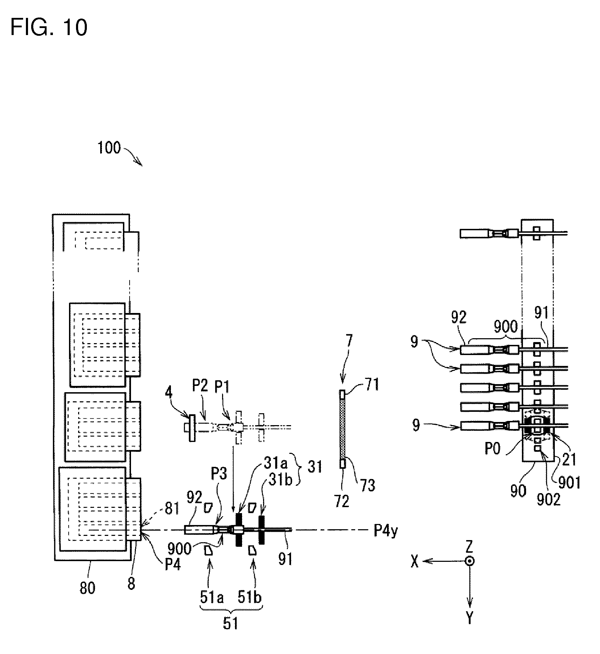

As shown in FIG. 10, the third conveyance step is a step in which the second-direction conveying mechanism 33 of the second gripping portion-related mechanism 3 moves the second gripping portion 31 in the second direction by a predetermined distance. Accordingly, the second-direction conveying mechanism 33 moves the second gripping portion 31 from the predetermined second intermediate position P2 to the predetermined third intermediate position P3. As described above, the second intermediate position P2 is a position at which the second gripping portion 31 takes over support of the terminal 92 from the third gripping portion 4, and the third intermediate position P3 is a position at which the second gripping portion 31 passes support of the terminal-attached electric wire 9 to the fourth gripping portion 51.

### Third Transfer Step

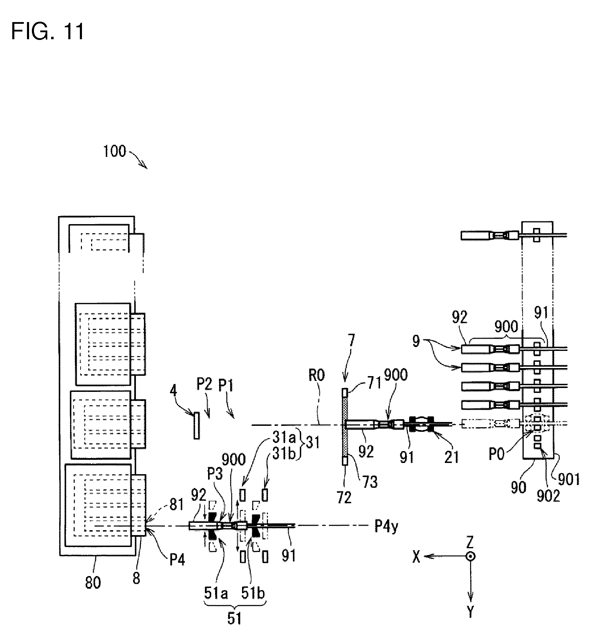

As shown in FIG. 11, the third transfer step is a step in which the fourth gripping portion 51 grips part of the terminal 92 and part of the electric wire 91 in the end region 900 of the terminal-attached electric wire 9 that was passed from the third gripping portion 4 to the second gripping portion 31 and is gripped by the second gripping portion 31, at the third intermediate position P3.

Moreover, in this step, the second gripping portion 31 releases the gripping of the end region 900 when the fourth gripping portion 51 grips the end region 900 of the terminal-attached electric wire 9. Accordingly, the fourth gripping portion 51 takes over support of the terminal-attached electric wire 9 from the second gripping portion 31.

### Fourth Conveyance Primary Step

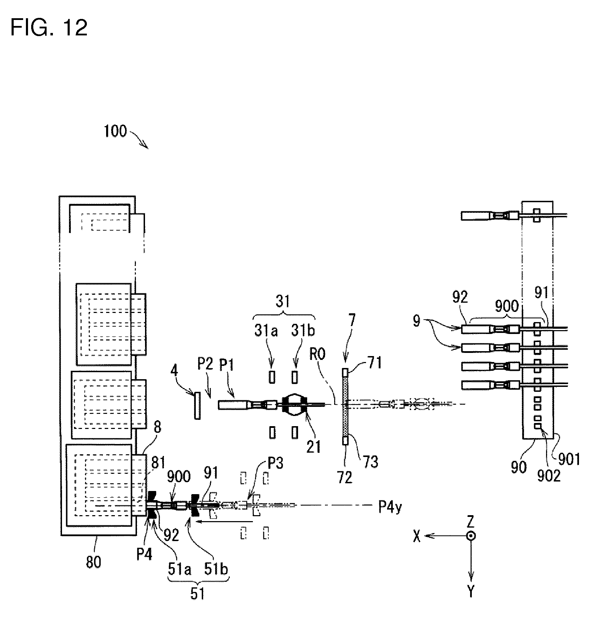

As shown in FIG. 12, the fourth conveyance primary step is a step in which the third-direction conveying mechanism 52 and the first-direction conveying mechanism 53 of the fourth gripping portion-related mechanism 5 move the fourth gripping portion 51, thereby moving the front end portion of the terminal 92 of the terminal-attached electric wire 9 from the third intermediate position P3 to the cavity 81 at the end position P4.

In this step, the third-direction conveying mechanism 52 moves the fourth gripping portion 51 in the third direction (the positive Z-axis direction) by a distance difference in the third direction between the known third intermediate position P3 and the known position of the target cavity 81. It will be appreciated that, if the distance difference is zero, the third-direction conveying mechanism 52 does not move the fourth gripping portion 51.

Moreover, in this step, the first-direction conveying mechanism 53 of the fourth gripping portion-related mechanism 5 moves the fourth gripping portion 51 in the first direction (the positive X-axis direction) by a distance corresponding to a distance difference in the first direction between the known third intermediate position P3 and the known position of the opening of the target cavity 81 located at the end position P4. Accordingly, the front end portion of the terminal 92 is inserted into the target cavity 81.

As described above, in the fourth conveyance primary step, the third-direction conveying mechanism 52 and the first-direction conveying mechanism 53 of the fourth gripping portion-related mechanism 5 move the fourth gripping portion 51 according to a movement procedure determined by a comparison between the third intermediate position P3 at which the fourth gripping portion 51 takes over support of the terminal-attached electric wire 9 from the second gripping portion 31 and the position of the respective cavities 81 of the connectors 8 set in advance.

### Fourth Conveyance Secondary Step

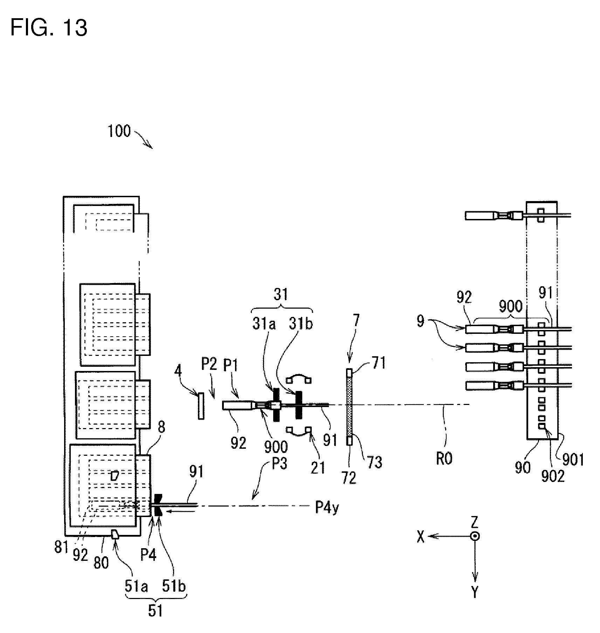

As shown in FIG. 13, the fourth conveyance secondary step is a step in which the first-direction conveying mechanism 53 of the fourth gripping portion-related mechanism 5 further moves the rear fourth gripping portion 51b in the first direction by a distance corresponding to a depth dimension of the target cavity 81 in a state where the rear fourth gripping portion 51b grips the electric wire 91 in the end region 900.

In this step, the front fourth gripping portion 51a releases the gripping of the terminal 92, the front third-direction conveying mechanism 52a of the fourth gripping portion-related mechanism 5 moves the front fourth gripping portion 51a in the third direction to a position at which no interference with the connector 8 occurs.

If the wire harness production device 100 performs the above-described steps, one terminal 92 of the terminal-attached electric wire 9 is inserted into the cavity 81 of the connector 8. The wire harness production device 100 repeats the above-described steps until insertion of the terminals 92 respectively into the cavities 81 of the plurality of connectors 8 supported by the connector arranging member 80 is completed.

When insertion of the terminals 92 respectively into the cavities 81 of the plurality of connectors 8 supported by the connector arranging member 80 is completed, the connector arranging member conveying mechanism 6 moves the connector arranging member 80 from the second operation position A4 to the second standby position A3. Furthermore, the electric wire arranging member conveying mechanism 1 moves the electric wire arranging member 90 from the first operation position A2 to the first standby position A1.

Then, at the first standby position A1 and the second standby position A3, the electric wire arranging member 90 and the connector arranging member 80 are replaced. The connector arranging member 80 detached from the connector arranging member conveying mechanism 6 at the second standby position A3 supports all of the plurality of connectors 8 forming one wire harness set or one sub wire harness set in a state where the terminals 92 of the terminal-attached electric wires 9 are inserted.

The connector arranging member 80 detached at the second standby position A3 in the state of supporting the plurality of connectors 8 into which the terminals 92 of the terminal-attached electric wires 9 are inserted is conveyed as it is to the location for the next step.

### Actions and Effects

In the foregoing embodiment, the terminal insertion mechanisms 2 to 5 that move the end region 900 of the terminal-attached electric wire 9 grip and move the end region 900 of the terminal-attached electric wire 9 supported at the predetermined start position P0, thereby inserting the terminal 92 of the terminal-attached electric wire 9 into the cavity 81 positioned at the predetermined end position P4.

Furthermore, in the foregoing embodiment, for example, the module of the electric wire arranging member 90 supporting the end regions 900 of the plurality of terminal-attached electric wires 9 and the module of the connector arranging member 80 supporting the plurality of connectors 8 are prepared in units of one wire harness set or one sub wire harness set. Then, the module of the electric wire arranging member 90 and the module of the connector arranging member 80 are attached to the wire harness production device 100. Accordingly, the step of inserting terminals of terminal-attached electric wires respectively into cavities of connectors is performed as a single integrated process in units of one wire harness set or one sub wire harness set.

Incidentally, the module of the electric wire arranging member 90 and the module of the connector arranging member 80 are larger and heavier than each one of the end regions 900 of the terminal-attached electric wires 9. Accordingly, use of a mechanism for moving the electric wire arranging member 90 and the connector arranging member 80 in two-dimensional or three-dimensional directions increases the size and the cost of the device.

In the foregoing embodiment, movement of each of the electric wire arranging member 90 and the connector arranging member 80 can be realized merely by a one-dimensional conveying mechanism, and the other conveying mechanisms only have to move the light-weight end region 900 of each of the terminal-attached electric wires 9. This aspect contributes to reducing the size and the cost of the device.

Accordingly, the foregoing embodiment is suited to allow the step of inserting the terminals 92 of the plurality of terminal-attached electric wires 9 respectively into the cavities 81 of the plurality of connectors 8 to be performed as a single integrated process in units of one wire harness set or one sub wire harness set.

Furthermore, according to the foregoing embodiment, the electric wire arranging member 90 can be moved in the first direction between the first standby position A1 at which the entire electric wire arranging member 90 is away from the start position P0 and the first operation position A2 at which part of the electric wire arranging member 90 is positioned at the start position P0. In this case, the electric wire arranging member 90 can be attached and detached at the first standby position A1 at which no interference occurs with the terminal insertion mechanisms 2 to 5. Accordingly, the electric wire arranging member 90 can be easily attached and detached.

In a similar manner, according to the foregoing embodiment, the connector arranging member 80 can be moved in the first direction between the second standby position A3 at which the entire connector arranging member 80 is away from the end position P4 and the second operation position A4 at which part of the connector arranging member 80 is positioned at the end position P4. In this case, the connector arranging member 80 can be attached and detached at the second standby position A3 at which no interference occurs with the terminal insertion mechanisms 2 to 5. Accordingly, the connector arranging member 80 can be easily attached and detached.

Furthermore, according to the foregoing embodiment, the optical sensor 7 detects that the front end portion of the terminal 92 of the terminal-attached electric wire 9 moving along the predetermined straight route R0 in the first direction reaches the position of the detection light 73. Then, the end region 900 of the terminal-attached electric wire 9 moves further in the first direction by a predetermined distance from the position at which the optical sensor 7 has detected the terminal 92, to reach the first intermediate position P1. Accordingly, the first-direction component of the variation in the positions of the terminals at the start position P0 is resolved when the end region 900 reaches the first intermediate position P1.

Moreover, according to the foregoing embodiment, the second gripping portion 31 that takes over support of the terminal-attached electric wire 9 grips part of the terminal 92 and part of the electric wire 91 in the end region 900 of the terminal-attached electric wire 9, from both sides in the second direction. Accordingly, the second-direction component of the variation in the positions of the terminals 92 at the start position P0 is resolved when the second gripping portion 31 takes over support of the terminal-attached electric wire 9.

Moreover, according to the foregoing embodiment, the third gripping portion 4 that temporarily takes over support of the terminal 92 of the terminal-attached electric wire 9 grips part of the terminal 92 of the terminal-attached electric wire 9, from both sides in the third direction. Accordingly, the third-direction component of the variation in the positions of the terminals 92 at the start position P0 is resolved when the third gripping portion takes over support of the terminal.

After the variation in the positions of the terminals 92 is resolved in this manner, the fourth gripping portion 51 takes over support of the end region 900 of the terminal-attached electric wire 9 from the second gripping portion 31, and moves according to a movement procedure determined by a comparison between the third intermediate position P3 at which the support is taken over and the position of the respective cavities 81 of the connectors 8 set in advance. Accordingly, the terminals 92 of the terminal-attached electric wires 9 are properly inserted into the cavities 81.

Thus, according to the foregoing embodiment, even in the case where the arrangement positions of the end regions 900 of the terminal-attached electric wires 9 at the start position P0 vary to some extent, the terminals 92 of the terminal-attached electric wires 9 can be properly positioned, and insertion failures of the terminals into the cavities 81 of the connectors 8 can be prevented.

Moreover, the foregoing embodiment can be realized by a relatively simple configuration including the transmission-type optical sensor 7 and mechanical mechanisms, without requiring devices whose adjustment is complicated and cost is high, such as a plurality of cameras and an image processing device.

The end region 900 of the terminal-attached electric wire 9 is supported at the start position P0 by the electric wire fastening portion 902 that grips and fastens the electric wire 91 from both sides in the second direction. In this case, in order to detach the end region 900 of the terminal-attached electric wire 9 from the electric wire fastening portion 902, a mechanism (the third-direction conveying mechanism 22 and the first-direction conveying mechanism 23) that moves the first gripping portion 21 at least in the first direction and the third direction is necessary.

Furthermore, in the foregoing embodiment, the first gripping portion 21 moves in the first direction and the third direction, and the second gripping portion 31 moves in the first direction. The first gripping portion-related mechanism 2 and the second gripping portion-related mechanism 3 that realize these movements can be compactly arranged such that no interference occurs therebetween.

The same is applied also to the case in which the first-direction conveying mechanism 32 of the second gripping portion-related mechanism 3 is replaced with a mechanism for moving the third gripping portion 4 in the first direction. That is to say, the first-direction conveying mechanism 32 moves at least one of the second gripping portion 31 and the third gripping portion 4 in the first direction, thereby changing the positional relationship between the terminal 92 of the terminal-attached electric wire 9 gripped by the second gripping portion 31 and the third gripping portion 4, between the first positional relationship and the second positional relationship described above.

Note that the first-direction conveying mechanism 32 that moves at least one of the second gripping portion 31 and the third gripping portion 4 in the first direction is an example of a second-third gripping portion positional relationship change mechanism.

Furthermore, in the foregoing embodiment, the second gripping portion 31 moves in the second direction between the predetermined second intermediate position P2 and the predetermined third intermediate position P3. Furthermore, the target cavity 81 of the connector 8 is positioned at the end position P4 that matches the predetermined third intermediate position P3 in the second direction.

Thus, according to the foregoing embodiment, the mechanism for inserting the terminals 82 of the terminal-attached electric wires 9 transferred from the first gripping portion 21 into the cavities 81 of the connectors 8 can be realized by a combination of relatively simple mechanisms, without requiring three-dimensional conveying mechanisms.

That is to say, the mechanism for inserting the terminals 92 into the cavities 81 can be realized by a combination of a one-dimensional conveying mechanism (the connector arranging member conveying mechanism 6), a two-dimensional conveying mechanism (a combination of the first-direction conveying mechanism 32 and the second-direction conveying mechanism 33), and a two-dimensional conveying mechanism (the fourth gripping portion conveying mechanism).

Furthermore, in the foregoing embodiment, the terminal insertion mechanisms 2 to 5 include the first gripping portion 21, the second gripping portion 31, and the fourth gripping portion 51 that grip part of the end region 900 of the terminal-attached electric wire 9, respectively at the start position P0, the first intermediate position P1, and the third intermediate position P3.

Furthermore, the terminal insertion mechanisms 2 to 5 include the conveying mechanisms 22, 23, 32, 33, 52, and 52 (gripping portion conveying mechanisms) that move the first gripping portion 21, the second gripping portion 31, and the fourth gripping portion 51. The conveying mechanisms 22, 23, 32, 33, 52, and 52 move the first gripping portion 21, the second gripping portion 31, and the fourth gripping portion 51 between a position at which the gripping portions gripped the part of the end region 900 of the terminal-attached electric wire 9 and a predetermined next position of the first intermediate position P1, the third intermediate position P3, and the end position P4.

While the first gripping portion 21, the second gripping portion 31, and the fourth gripping portion 51 transfer the terminal-attached electric wire 9 at the first intermediate position P1 and the third intermediate position P3, the conveying mechanisms 22, 23, 32, 33, 52, and 52 move the gripping portions 21, 31, and 51. Accordingly, the end region 900 of the terminal-attached electric wire 9 moves from the start position P0 via the intermediate positions P1 and P3 to the end position P4.

Thus, according to the foregoing embodiment, as described below, two-dimensional conveying mechanisms that move the first gripping portion 21 and the fourth gripping portion 51 can be allowed to operate in parallel without causing any interference therebetween, and the production efficiency of wire harnesses increases.

That is to say, the wire harness production device 100 includes the second-direction conveying mechanism 33 of the second gripping portion-related mechanism 3. Thus, the first gripping portion-related mechanism 2 and the fourth gripping portion-related mechanism are spaced away from each other in the second direction (Y-axis direction), and, thus, no interference occurs therebetween.

Accordingly, as shown in FIGS. 10 to 13, for example, the wire harness production device 100 can perform, in parallel, the steps from the third transfer step to the fourth conveyance secondary step on an end region 900 of one terminal-attached electric wire 9, and the steps from the start/end position determining step to the first transfer step or the steps from the start/end position determining step to the second transfer step on an end region 900 of the next terminal-attached electric wire 9. As a result, the production efficiency of wire harnesses increases.

### Application Example

It is also conceivable that the wire harness production device 100 includes terminal insertion mechanisms different from the terminal insertion mechanisms 2 to 5 shown in the drawings. For example, it is conceivable that the terminal insertion mechanism includes a three-dimensional conveying mechanism for moving the first gripping portion 21, two cameras, and an image processing device.

In the case of this example, the three-dimensional conveying mechanism moves the first gripping portion 21 in the first direction, the second direction, and the third direction. The two cameras capture images of the terminal 92 of the terminal-attached electric wire 9 gripped by the first gripping portion 21, from two directions. The image processing device processes the images from the two cameras, thereby detecting the position of the terminal 92.

Moreover, the image processing device calculates the movement direction and the movement distance of the first gripping portion 21 for inserting the terminal 92 into the target cavity 81, based on the detected position of the terminal 92 and the known positional data of the target cavity 81. The three-dimensional conveying mechanism moves the first gripping portion 21 according to the calculation result, thereby inserting the terminal 92 into the target cavity 81.

Furthermore, it is also conceivable that the wire harness production device 100 includes a mechanism for moving the second gripping portion 31 in the third direction, instead of the first-direction conveying mechanism 32 of the second gripping portion-related mechanism 3. In this case, the first gripping portion-related mechanism 2 moves the first gripping portion 21 along the straight route in the first direction to the gripping position (the second intermediate position P2) of the third gripping portion 4. In this case, the first intermediate position P1 and the second intermediate position P2 are the same position.

The second gripping portion 31 is temporarily moved by the moving mechanism in the direction (the negative Z-axis direction) opposite to the third direction, so that contact with the end region 900 of the terminal-attached electric wire 9 gripped by the first gripping portion 21 is avoided.

Note that the production device and method for a wire harness according to the present invention can also be configured by freely combining the above-described embodiment and application examples or by appropriately modifying or omitting part of the embodiment or application examples, within the scope of the invention recited in the claims.

### List of Reference Numerals

1 Electric wire arranging member conveying mechanism
10 Control portion
100 Wire harness production device
101 Calculating portion
102 Storage portion
103 Signal interface
11 Fixing seat
111 Electric wire arranging member lock mechanism
12 Linear actuator
2 to 5 Terminal insertion mechanism
2 First gripping portion-related mechanism
21 First gripping portion
211 First opposing member
212 First clamping actuator
22 Third-direction conveying mechanism (first gripping portion conveying mechanism)
23 First-direction conveying mechanism (first gripping portion conveying mechanism)
231 Sliding support portion
232 Linear actuator
3 Second gripping portion-related mechanism
31 Second gripping portion
311 Second opposing member
312 Second clamping actuator
31a Front second gripping portion
31b Rear second gripping portion
32 First-direction conveying mechanism (second-third positional relationship change mechanism)
321 Sliding support portion
322 Linear actuator
33 Second-direction conveying mechanism (second gripping portion conveying mechanism)
331 Sliding support portion
332 Linear actuator
4 Third gripping portion
41 Third opposing member
42 Third clamping actuator
5 Fourth gripping portion-related mechanism
51 Fourth gripping portion
511 Fourth opposing member
512 Fourth clamping actuator
51a Front fourth gripping portion
51b Rear fourth gripping portion
52 Third-direction conveying mechanism (fourth gripping portion conveying mechanism)
52a Front third-direction conveying mechanism
52b Rear third-direction conveying mechanism
53 First-direction conveying mechanism (fourth gripping portion conveying mechanism)
531 Sliding support portion
532 Linear actuator
6 Connector arranging member conveying mechanism
61 Fixing seat
611 Connector arranging member lock mechanism
62 Linear actuator
7 Optical sensor
70 Electric wire catch portion
71 Light-emitting portion
72 Light-receiving portion
73 Detection light
8 Connector
80 Connector arranging member
81 Cavity
82 Terminal
9 Terminal-attached electric wire
90 Electric wire arranging member
900 End region of terminal-attached electric wire
901 Base portion of electric wire arranging member
902 Electric wire fastening portion
91 Electric wire
92 Terminal
A1 First standby position
A2 First operation position
A3 Second standby position
A4 Second operation position
P0 Start position
P1 First intermediate position
P2 Second intermediate position
P3 Third intermediate position
P4 End position
R0 Straight route

## Claims

1. A production device for producing a wire harness, the wire harness including a plurality of terminal-attached electric wires each having an electric wire and a terminal connected to an end portion of the electric wire, and a plurality of connectors each of which has a plurality of cavities that accommodate the terminals of the terminal-attached electric wires, the production device comprising:
an electric wire arranging member conveying mechanism for detachably holding an electric wire arranging member in which a plurality of electric wire fastening portions are arranged in one line, the electric wire fastening portions elastically gripping and fastening the terminal-attached electric wires, at a portion of the electric wires on the side of the terminal, in a state where front ends of the terminals of the terminal-attached electric wires are oriented in a first direction and the electric wire fastening portions are lined up in a second direction that is orthogonal to the first direction, and for moving the electric wire arranging member in the second direction, thereby selectively positioning the individual electric wire fastening portions at a predetermined start position;
a connector arranging member conveying mechanism for detachably holding a connector arranging member supporting the plurality of connectors that are arranged in at least one line, in a state where the plurality of connectors are arranged parallel to the direction in which the electric wire fastening portions are lined up, and for moving the connector arranging member in the second direction, thereby selectively positioning the individual cavities of the connectors at a predetermined end position in the second direction; and
a terminal insertion mechanism for gripping and moving part of an end region of each of the terminal-attached electric wires, the end region extending from the terminal to a portion of the electric wire on the side of the terminal, thereby detaching the terminal-attached electric wire from the electric wire fastening portion at the start position, and inserting the terminal of the detached terminal-attached electric wire into the cavity positioned at the end position.

2. The production device for a wire harness, according to claim 1, wherein the electric wire arranging member conveying mechanism can move the electric wire arranging member in the first direction between a first standby position at which the entire electric wire arranging member is away from the start position and a first operation position at which part of the electric wire arranging member is positioned at the start position.

3. The production device for a wire harness, according to claim 1 or 2, wherein the connector arranging member conveying mechanism can move the connector arranging member in the second direction between a second standby position at which the entire connector arranging member is away from the end position and a second operation position at which part of the connector arranging member is positioned at the end position.

4. The production device for a wire harness, according to any one of claims 1 to 3,
wherein the terminal insertion mechanism includes:
at least three gripping portions for gripping part of the end region of the terminal-attached electric wire respectively at the start position and at least two predetermined intermediate positions; and
a gripping portion conveying mechanism for moving each of the gripping portions between a position at which the gripping portion gripped the part of the end region of the terminal-attached electric wire and a predetermined next position of the intermediate positions and the end position; and
while the gripping portions transfer the terminal-attached electric wire at the intermediate positions, the gripping portion conveying mechanism moves the gripping portions, so that the end region of the terminal-attached electric wire moves from the start position via the intermediate positions to the end position.

5. A production method for producing a wire harness, the wire harness including a plurality of terminal-attached electric wires each having an electric wire and a terminal connected to an end portion of the electric wire, and a plurality of connectors each of which has a plurality of cavities that accommodate the terminals of the terminal-attached electric wires, the production method comprising:
a step in which a mechanism for detachably holding and moving an electric wire arranging member in which a plurality of electric wire fastening portions are arranged in one line, the electric wire fastening portions elastically gripping and fastening the terminal-attached electric wires, at a portion of the electric wires on the side of the terminal, holds the electric wire arranging member in a state where front ends of the terminals of the terminal-attached electric wires are oriented in a first direction and the electric wire fastening portions are lined up in a second direction that is orthogonal to the first direction, and the mechanism moves the electric wire arranging member in the second direction, thereby selectively positioning the individual electric wire fastening portions at a predetermined start position;
a step in which a mechanism for detachably holding and moving a connector arranging member supporting the plurality of connectors that are arranged in at least one line, holds the connector arranging member in a state where the plurality of connectors are arranged parallel to the direction in which the electric wire fastening portions are lined up, and the mechanism moves the connector arranging member in the second direction, thereby selectively positioning the individual cavities of the connectors at a predetermined end position in the second direction; and
a step in which a mechanism for gripping and moving part of an end region of each of the terminal-attached electric wires, the end region extending from the terminal to a portion of the electric wire on the side of the terminal, detaches the terminal-attached electric wire from the electric wire fastening portion at the start position, and the mechanism inserts the terminal of the detached terminal-attached electric wire into the cavity positioned at the end position.
